# EUROPÄISCHE PATENTSCHRIFT

(11) **EP 1 587 701 B1**
(45) Veröffentlichungstag und Bekanntmachung des Hinweises auf die Patenterteilung: **17.04.2013**
(21) Anmeldenummer: 03815372.2
(22) Anmeldetag: 22.12.2003
(51) Int. Cl.: B60J 5/06, B60J 5/04

(54) **SCHWENKSCHIEBETÜR FÜR FAHRZEUGE**
PIVOTING SLIDING DOOR FOR VEHICLES
PORTIÈRE COULISSANTE PIVOTANTE POUR VÉHICULES

(30) Priorität: 21.01.2003 AT 762003
(43) Veröffentlichungstag der Anmeldung: 26.10.2005
(73) Patentinhaber: Knorr-Bremse Gesellschaft mit beschränkter Haftung, 2340 Mödling (AT)
(72) Erfinder: JAROLIM, Reinhold, A-3335 Weyer (AT)
(74) Vertreter: Schönmann, Kurt
(86) Internationale Anmeldenummer: PCT/EP2003/014724
(87) Internationale Veröffentlichungsnummer: WO 2004/065154

(56) Entgegenhaltungen:
- EP-A- 0 517 334
- DE-A- 4 334 403
- DE-A- 19 946 501
- DE-U- 9 216 812

## Beschreibung

Die Erfindung betrifft eine Schwenkschiebetür für Fahrzeuge, insbesondere Schienenfahrzeuge oder Liftkabinen mit mindestens einem Türflügel, der im Schließzustand in der Fahrzeugwand angeordnet ist und der im Öffnungszustand an der Außenseite vor der Fahrzeugwand angeordnet ist und dabei eine Türöffnung frei läßt, wobei Antriebsvorrichtungen sowie Querführungsvorrichtungen und Längsführungsvorrichtungen vorgesehen sind, die eine Bewegung des mindestens einen Türflügels quer zu der Fahrzeugwand und entlang der Fahrzeugwand ermöglichen, wobei die Längsführungsvorrichtungen mittels der Querführungsvorrichtungen bewegt werden.

Ein derartiger Türantrieb ist beispielsweise aus der EP 0 820 889 A bekannt. Es bewegt sich bei diesem Türantrieb so wie bei vielen anderen auch, nahezu die gesamte Antriebsvorrichtung, die auf einem Schlitten montiert ist, entlang der Querführungsvorrichtungen und es ist daher notwendig, zumindest die Längsführungsvorrichtungen, in den meisten Fällen aber auch die gesamten anderen Antriebskomponenten in der ausgestellten Endlage zu fixieren, um sicherzustellen, dass die Türflügel mit ihren Innenseiten nicht an der Außenseite der Fahrzeugwand anstoßen. Gleichermaßen muß sichergestellt werden, dass gegen Ende der Schließbewegung der Türflügel entlang der Längsführungsvorrichtungen die Fixierung aufgehoben wird und die Querführungsvorrichtungen die Einzugsbewegung der Längsführungsvorrichtungen, damit auch der Türflügel, und, in den meisten Ausführungsformen, des gesamten Schlittens bewirken.

Diese Bewegungsabfolge wird im Stand der Technik durch eine eigene Führungsschiene erreicht, die ortsfest bezüglich des Türportals und damit des Wagenkastens des Fahrzeuges angeordnet ist und dieses Problem zufriedenstellend löst.

Ein anderes Problem ergibt sich aus der Bedingung, dass beim Ausfall der Energie des Türantriebes dennoch sichergestellt sein muß, dass die Tür sich nicht durch Personen oder Gegenstände, die gegen den Türflügel stoßen, geöffnet wird. Zumeist wird im normalen, geschlossenen Zustand der Tür der Türantrieb ebenfalls kraftlos, bei elektrischem Antrieb stromlos, geschaltet. Es darf in diesem Zustand, selbst, wenn noch mechanische Riegel vorhanden sind, nicht zu einem Öffnen der Tür durch Kraftausübung auf den Türflügels oder durch Betätigen des Türgriffes kommen, diese muß fest und zuverlässig geschlossen bleiben. Bei energielosem Türantrieb darf die Tür nur durch Betätigen einer Türnotbetätigung zu öffnen sein.

Im Stand der Technik wird diese Forderung durch einen sogenannten Übertotpunktmechanismus verfüllt, wobei ein Dreh- oder Schwenkteil des Türantriebes, der mit einem zweiten schwenkbaren Bauteil drehbar verbunden ist, im Zuge der Schließbewegung die Verbindungslinie der Drehachsen der beiden Bauteile durchläuft und dann nahe dieses sogenannten Totpunktes seine Endlage hat. Bei jeder Ausübung von Kraft auf den Türflügel und damit auf diesen Schwenkteil, kann diese zufolge der Ruhelage des Schwenkteiles nur zu einem Moment führen, das in Schließrichtung auf den Schwenkteil wirkt.

So sicher derartige Vorrichtungen auch das ungewollte oder unautorisierte Öffnen der Türen verhindert, so nachteilig ist dieser Mechanismus, wenn die Tür tatsächlich durch die Türnotbetätigung geöffnet werden soll, insbesondere, wenn dies durch ungeübte Personen und/oder im Falle einer Panik geschehen soll. Es ist nämlich in diesen Situationen mit hoher Wahrscheinlichkeit so, dass bereits Druck auf den Türflügeln in Öffnungsrichtung ausgeübt wird, während versucht wird, den Antriebsmechanismus mit dem Türnotbetätigung über den Totpunkt zu bringen. Was im normalen Betrieb der Sicherheit dient, wirkt nun dem gewünschten Öffnungsvorgang entgegen und es bedarf außerordentlicher Kräfte, um in diesem Fall den Türantrieb über den Totpunkt zu bewegen. Nach Überwindung desselben wird natürlich durch die andrückenden Personen oder Gegenstände die Öffnungsbewegung eingeleitet bzw. unterstützt.

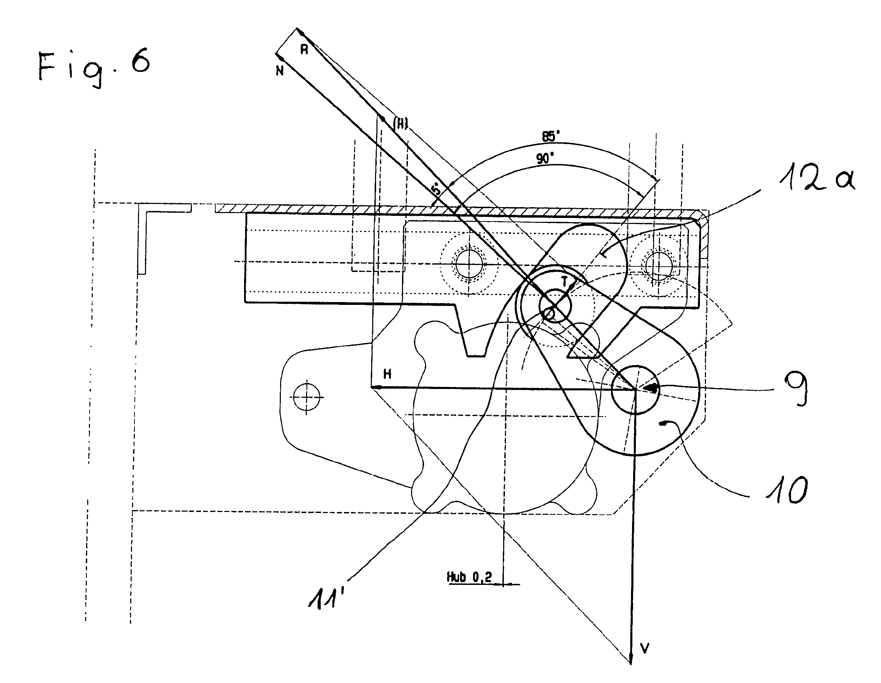

Aus der DE 199 46 501 A ist eine Türe bekannt, bei der zur Betätigung eines Ausstellmechanismus für das Türblatt im Bodenbereich der Nebenschließkante ein Betätigungshebel verwendet wird. Dazu wird ein Arm um eine portalfeste Achse durch die Querbewegung der Aufhängung des Türblattes beim Öffnen bzw. Schließen verdreht, wobei ein Zapfen der Aufhängung in einem Langloch des Armes gleitet und so die dazu notwendige Kraft bzw. das notwendige Drehmoment überträgt. Diese Konstruktion hat mit der Fixierung des Türblattes in seiner geschlossenen Stellung nichts zu tun. Diese Sicherung erfolgt mittels eines klassischen Über-Totpunkt-Mechanismus, der in Fig. 6 dargestellt ist.

Es ist das Ziel der Erfindung, einen Türantrieb der eingangs genannten Art zu schaffen, der diese Nachteile nicht aufweist, sondern unabhängig von der momentanen Belastung des Türblattes ein Öffnen der Tür im Notfall mittels der Türnotbetätigung unter stets gleichen kinematischen und vor allem dynamischen Bedingungen sicherstellt und dabei weder mehr Platz benötigt als die derzeit verwendeten Übertotpunktmechanismen, noch höhere Investitionskosten mit sich bringt.

Erfindungsgemäß werden diese Ziele dadurch erreicht, dass der Schwenkteil einen Führungsteil aufweist, der mit einer Führung zusammenwirkt, und dass die Führung in dem

Bereich, in dem der Schwenkteil in der geschlossenen Lage der Tür mit ihr zusammenwirkt, einen Kreisbogenabschnitt um die Drehachse des Schwenkteiles aufweist.

Durch diese Maßnahme erzeugen die auf das Türblatt wirkenden Kräfte kein Moment am Schwenkteil und die Verriegelung erfolgt in einem Bogenabschnitt, der größenmäßig dem Bogenabschnitt üblicher Übertotpunktmechanismen entspricht, aber auf neutrale Weise. Um zu verhindern, dass der Schwenkteil im Zuge von Erschütterungen, Vibrationen, Neigungen des Fahrzeuges, etc. in eine Position gelangt, in der dieser neutrale Bereich verlassen wird, wird der Schwenkteil in dieser Lage entweder formschlüssig oder kraftschlüssig, beispielsweise durch eine Feder, gehalten. Zum Öffnen muß nur die formschlüssige Sicherung aufgehoben oder die stets mit konstanter und geringer Kraft wirkende kraftschlüssige Sicherung durch die Türnotbetätigung überwunden werden, so dass der Teil des Schwenkteiles, der mit der Führung zusammenwirkt, aus dem neutralen Bereich gelangt, wodurch das Öffnen der Tür im Notfall unabhängig von der Größe der auf das Türblatt in Öffnungsrichtung wirkenden Kräfte, zu öffnen ist.

Die Erfindung wird im folgenden an Hand der Zeichnung näher erläutert. Dabei zeigt
die Fig. 1 einen Vertikalschnitt normal zur Außenwand des Fahrzeuges dem oberen Türbereich in geschlossener Lage der Tür,
die Fig. 2 den Schnitt gemäß Fig. 1 mit ausgestelltem Türblatt,
die Fig. 3 die Darstellung gemäß Fig. 1 mit etwas verschobener Schnittebene, so dass der Ausstellmechanismus deutlich wird und
die Fig. 4 des neuen den Bereich des erfindungsgemäßen Totpunktmechanismus in vergrößertem Maßstab in verschiedenen Positionen während der Öffnungsbewegung.

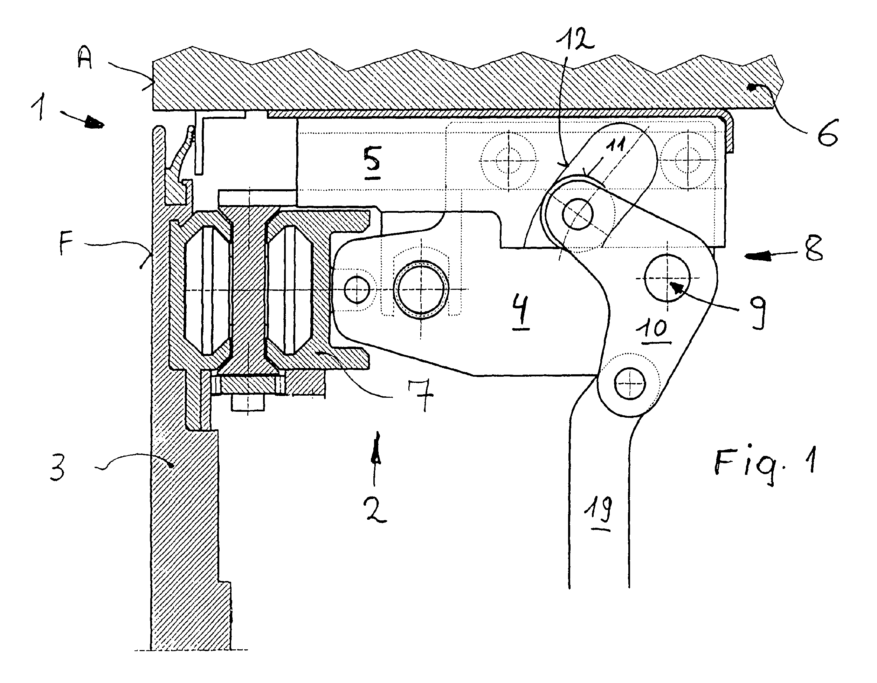

Die Fig. 1 zeigt einen Vertikalschnitt im Randbereich einer in ihrer Gesamtheit mit 1 bezeichneten Tür dar. Bei üblichen Türen von Fahrzeugen, beispielsweise Schienenfahrzeugen, bei denen die Türen in den Seitenwänden des Fahrzeugkastens 6 angeordnet ist, vcrläuft dieser Schnitt somit zumindest im wesentlichen normal zur Fahrzeuglängsachse. Die Fig. 1 zeigt den Bereich des Türmechanismus 2, der im wesentlichen in seiner Gesamtheit, samt dem zumindest einen Türflügel 3, auf einem Schlitten 4 angeordnet ist, der mittels Rollen in Führungen 5, die fest am Fahrzeugkasten 6, gegebenenfalls an einem fest mit dem Wagenkasten 6 verbundenen Portal oder Rahmen, befestigt sind, verschieblich ist.

Bei der in Fig. 1 dargestellten geschlossenen Lage entspricht die Außenfläche F des Türflügels 3 im wesentlichen der Außenfläche A des Fahrzeugkastens 6, wie dies bei Schwenkschiebetüren üblich ist. Das gezeigte Ausführungsbeispiel stellt eine teleskopierbare Tür dar, dabei ist ein aus zumindest drei Teilen bestehendes Teleskop 7 einerseits mit dem Schlitten 4, andererseits mit dem Türflügel 3 verbunden, und ermöglicht so die Verschiebung des Türflügels 3 entlang der Außenseite des Wagenkastens 6. Die Verschieberichtung verläuft bei üblichen, auf der Seite des Fahrzeugkastens angeordneten Türen, somit parallel zur Längsachse des Fahrzeuges (Bei Lifttüren sind diese Relationen entsprechend anders orientiert).

Dieser Teil des Türmechanismus 2 hat mit der Erfindung nicht unmittelbar zu tun, weshalb auf eine eingehendere Beschreibung verzichtet wird. So kann statt eines Teleskops ein anderes Schiebesystem vorgesehen sein u.dgl. mehr. Wesentlich ist nur, dass der bzw. die Türflügel 3 letztlich am Schlitten 4 montiert sind, wobei nicht außer acht gelassen werden darf, dass zum gezeigten Teleskop noch Führungen, Verriegelungen, Sensoren etc. kommen, die aber ebenfalls nur am Rande mit der Erfindung zu tun haben, weshalb hier in der Beschreibung nur soweit auf sie eingegangen wird, wie der Kern der Erfindung es erfordcrt.

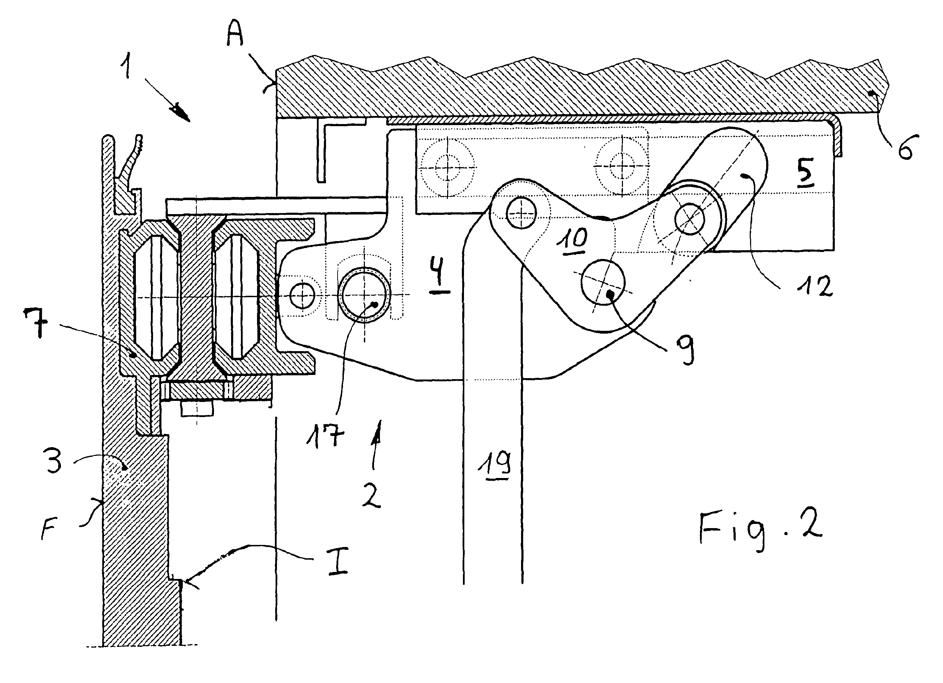

Die Fig. 2 zeigt die Tür der Fig. 1 im gleichen Schnitt in der ausgestellten Lage. Dabei ist der Schlitten 4 in bzw. entlang der Führung 5 zur Fahrzeugaußenseite hin verschoben, so dass der Türflügel 3 auch mit seiner Innenfläche 1 außerhalb der Fahrzeugaußenseite A zu liegen kommt und entlang des Teleskops 7 (normal zur Darstellungsebene) verfahren werden kann, ohne den Fahrzeugkasten 6 zu rammcn.

Zurückkehrend zur Fig. 1 ist festzuhalten, dass auch bei kraftlosem Türantrieb sichergestellt sein muß, dass der Türflügel 3 nicht durch auf ihn wirkende Kräfte geöffnet wird, sondern dass es hier eine Verriegelung geben muß, die nur durch ordnungsgemäßes Aktivieren des Türantriebes oder durch Betätigen einer Türnotbetätigung aufgehoben werden kann. Die in ihrer Gesamtheit mit 8 bezeichnete erfindungsgemäße Verriegelung besteht im wesentlichen aus einem am Schlitten 4 um eine Drehachse 9 schwenkbar gelagerten Verriegelungshebel 10, der an einem Ende eine Rolle 11 trägt, die in einer bezüglich des Fahrzeugkastens 6 ortsfesten Nut 12 verschieblich bzw. abrollbar gelagert ist. Das Funktionieren dieses Verriegelungsmechanismus wird weiter unten näher erläutert.

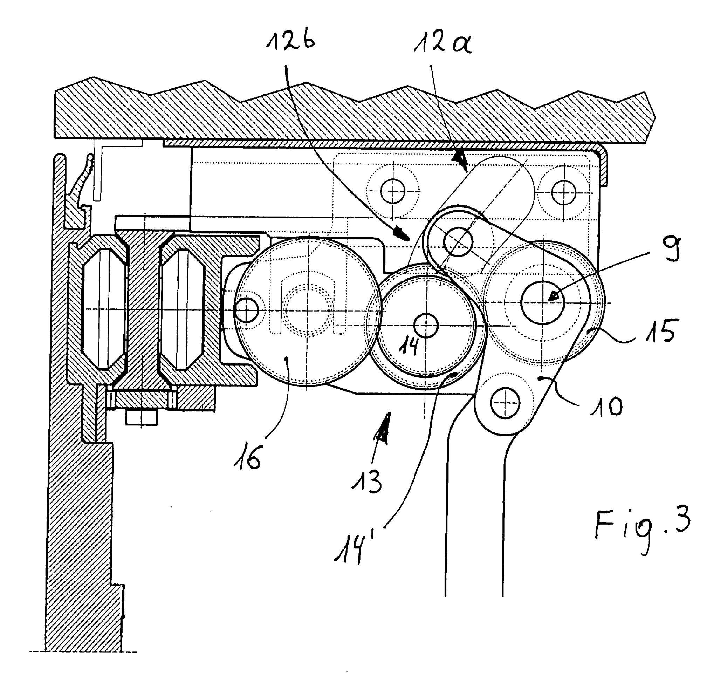

Die Fig. 3 zeigt einen Schnitt parallel zum Schnitt der Fig. 1 bei gleicher Position der Tür und illustriert den eigentlichen Türantrieb 13. Im dargestellten Ausführungsbeispiel ist mit der Abtriebswelle eines Elektromotors ein Zahnrad 14 drehfest verbunden. Ein weiteres Zahnrad 14' ist mit dem Gehäuse des um seine Abtriebswelle drehbar aufgehängten Elektromotors drehfest verbunden. Das Zahnrad 14' kämmt mit einem drehfest mit dem Verriegelungshebel 10 und somit mit ihm um seine Drehachse 9 rotierenden Zahnrad 15. Das Zahnrad 14 kämmt mit einem Zahnrad 16, das mit einer Spindel 17 (Fig. 2) drehfest verbunden ist, wobei die Spindel 17 wiederum gemeinsam mit einer mit dem Türflügel 3 passend verbundenen Mutter für die Längsbewegung des Türflügels verantwortlich ist.

Die Funktionsweise der Vorrichtung ist nun folgende: Wenn der Motor, ausgehend von der in Fig. 3 dargestellten Position, sich in Öffnungsrichtung zu drehen beginnt, verhindert eine (nicht dargestellte) Führung die Bewegung des Türflügels 3 entlang des Teleskops 7 und damit jede Drehung der Spindel 17 und so auch der Zahnräder 16 und 14, so dass, durch das Reaktionsmoment des Motors, dieser sich samt dem Zahnrad 14' in die Gegenrichtung dreht und so das Zahnrad 15 um die Drehachse 9 verdreht. Da das Zahnrad 15 fest mit dem Verriegelungshebel 10 verbunden ist, verschwenkt sich dieser (in Fig. 3 im Uhrzeigersinn) und verschiebt so die Rolle 11 in der Nut 12.

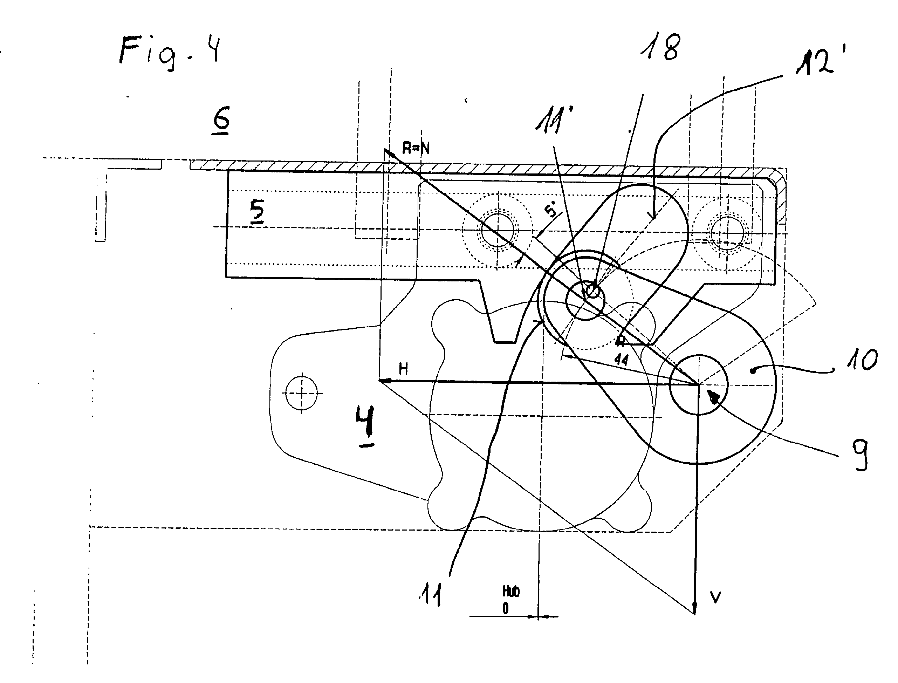

Die Nut 12 weist nun einen zumindest im wesentlichen geradlinigen Abschnitt 12a und, ab einem Übergangspunkt 18 (Fig. 4), einen daran anschließenden, gekrümmten Abschnitt 12b auf. Bei geschlossener Tür (in der verriegelten Position) befindet sich die Rolle 11 im gekrümmten Abschnitt 12b. Die Krümmung des Abschnittes 12b entspricht zumindest im wesentlichen der Krümmung, die ein Kreis mit dem Mittelpunkt an der Stelle, an der die Drehachse 9 bei geschlossener Tür liegt, aufweist. Es kommt somit zu Beginn der Drehbewegung des Verriegelungshebels 10 um seine Drehachse 9 zu einer der Form der Nut 12b angepaßten Bewegung der Rolle 11 in der Nut, ohne dass diese Bewegung merkliche Reaktionskräfte zwischen der Rolle und der Wand der Nuthervorruft. Da es keine solchen Kräfte gibt, kommt es auch zu keiner Verschiebung des Schlittens 4 in den Führungen 5.

Wenn nun durch die fortschreitende Drehung des Verriegelungshebels 10 die Rolle 11 in den geradlinigen Abschnitt 12a der Nut 12 gelangt, verucht sie die Drehbewegung fortzusetzen und dabei gegen die ("untere" bzw. "rechte") Nutwand gedrückt, was zu einer Reaktionskraft auf die Rolle und damit auf den Verriegelungshebel führt. Dadurch wird die Drehachse 9 und mit ihr der gesamte Schlitten 4 samt dem Türantrieb 13 und dem Türmechanismus 2 und dem Türflügel 3 verschoben (Ausstellbewegung), bis schließlich die Situation der Fig. 2 erreicht ist.

Diese Ausstellbewegung ist in größerem Detail in den Fig. 4 bis 9 dargestellt, wobei einerseits der Maßstab der Darstellung vergrößert, andererseits alle türseitig des Schlittens 4 befindlichen Bauteile aus Gründen der Übersichtlichkeit weggelassen worden sind. Der Verriegelungshebel 10 ist anders als in den Fig. 1 bis 3 geformt, was aber keine Rolle spielt. Es entspricht nun die Position der einzelnen Teile ind der Fig. 4, der in der Fig. 1: Der Schlitten 4 befindet sich in der am Weitesten ins Innere des Fahrzeugkastens geschobenen Lage, der Verriegelungshebel 10 nimmt eine Lage ein, die gegen den Uhrzeigersinn nicht bzw. kaum weiter verdreht werden kann und die Rolle 11 befindet sich im gekrümmten Teil 12b der Kulisse bzw. der Nut 12 in einigem, wenn auch geringem, Abstand vom Übergangspunkt 18.

Die Form der Nut 12 ist in Fig. 4 und den nachfolgenden Figuren durch ihre Mittellinie 12' deutlich gemacht, der Übergang zwischen dem geradlinigen Abschnitt 12a und dem gekrümmten Abschnitt 12b ist durch einen kleinen Kreis um den Übergangspunkt 18 markicrt. Es ist auch deutlich zu erkennen, dass die Mittellinie 12' der Nut 12 im gekrümmten Abschnitt die Form eines Kreisbogens um die Drehachse 9 bei dieser Lage des Schlittens 4 aufweist. Wcitcrs ist ersichtlich, dass der Mittelpunkt 11' der Rolle 11 sich bereits auf dem gekrümmten Abschnitt 12b befindet, somit Abstand vom Übergangspunkt 18 aufweist, im gezeigten Beispiel die eingetragenen 5°.

Das Besondere an dieser Ausformung und dieser Lage ist nun, dass auf den Türflügel wirkende Kräfte, darunter versteht man nicht die Antriebs- und Führungskräfte während des Betriebes, sondern die Kräfte, die von Passagieren bewußt oder unbewußt auf den Türflügel ausgeübt werden (dagegen stoßen in Kurven, anlehnen von Personen, die Stehplätze benützen, Vandalenakte, Druckunterschiede beim Durchfahren von Tunnels oder bei Zugbegegnungen etc.), soferne die Resultierende zumindest annähernd horizontal auf den Türflügel nach außen gerichtet ist, auf den Schlitten 4 eine Kraft in Richtung des Pfeiles H ausüben. Vertikalkomponenten, die auf den Schlitten 4 übertragen werden, werden durch die Führung 5, in der der Schlitten im dargestellten Ausführungsbeispiel durch Rollen gelagert ist, übernommen.

Die einzigen Reaktionskräfte, die gegen die Horizontalkraft H wirken können, sind die zwischen der Rolle 11 und der Wand Nut 12 auftretenden Kräfte, diese können (Reibung vernachlässigt) nur normal auf die gemeinsame Tangentialebene im Kontaktbereich zwischen der Oberfläche der Rolle 11 und der Oberfläche der Nutwand (Richtung N) auftreten, die aber zufolge der geschilderten geometrischen Verhältnisse mit der Verbindungsgerade in Richtung R zwischen der Drehachse 9 und der Drehachse 11' der Rolle 11 zusammenfällt: R=N. Dies bedeutet, dass auch beim Auftreten noch so großer Kräfte H kein Drehmoment am Verriegelungshebel 10 entsteht, so dass der Schlitten nicht in Bewegung kommen kann und daher auch der Türflügel 3 sich nicht in Öffnungsrichtung bewegen kann. Es gleicht die horizontale Komponente der Normalkraft N die angreifende Horizontalkraft H aus: Die Tür ist verriegelt.

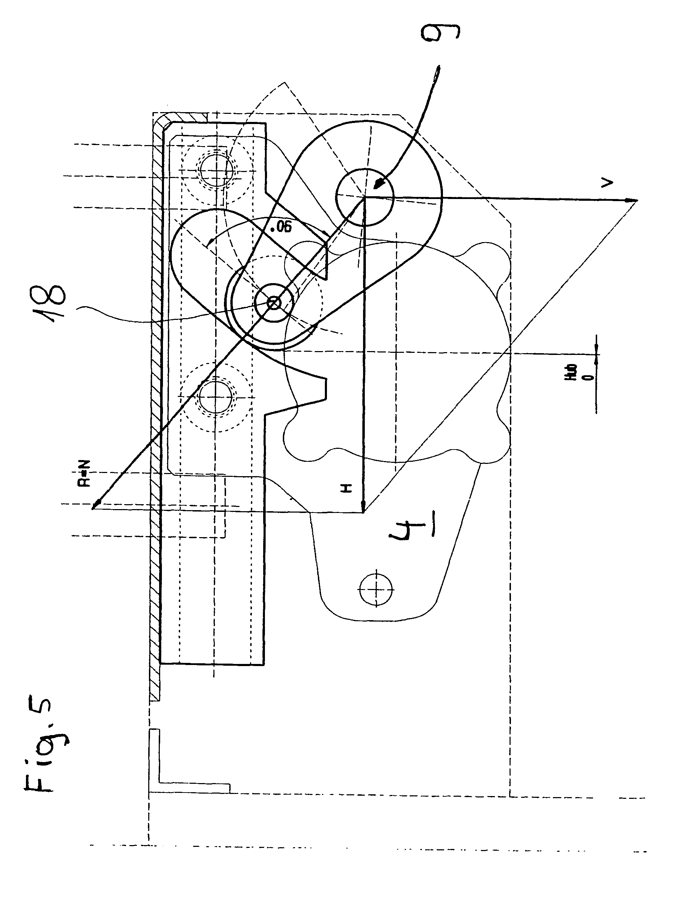

Wenn nun die normale Öffnungsbewegung eingeleitet wird, so gelangt, wie in Fig. 5 dargestellt, durch das auf den Verriegclungshebel 10 ausgeübte Drehmoment die Drehachse 11' der Rolle 11 an den Übergang 18 zwischen dem geradlinigen Abschnitt 12a und dem gebogenen Abschnitt 12b der Nut 12 und damit an die Grenze des Bereiches, in dem der oben dargelegte Sachverhalt gilt. Bei der Verdrehung, um die, im dargestellten Ausführungsbeispiel 5°, zwischen der Endlage gemäß Fig. 4 und der neutralen Grenzlage gemäß Fig. 5 vollführt der Schlitten, angegeben an der Drehachse des Motors (Fig. 3) keinen Hub, d.h. dass diese Bewegung durch noch so große Kräfte H in horizontaler Richtung nicht erschwert wird.

Dies ist ein großer Unterschied zu den vorbekannten Über-Totpunkt-Mechanismen, bei denen es im Zuge der Bewegung von der verriegelten Endlage zur Grenzlage immer notwendig war "den Totpunkt zu überwinden", was übertragen auf das dargestellte Ausführungsbeispiel einer zwar geringen, aber doch merklichen Bewegung des Schlittens 4 entgegen der Kraft 11 bedeutet, so dass im Falle von Panik oder einfach großen Kräften, diese Überwindung des Totpunktes schwer macht und im Falle des händischen Öffnens gerade bei Auftreten von Panik oft nahezu unmöglich macht.

Aus Fig. 6 ist ersichtlich, wie beim Eintritt in den geradlinigen Abschnitt 12a der Nut einerseits die Hubbewegung beginnt, andererseits durch das Auseinanderklaffen der Normalkraft N zwischen Rolle 11 und Nutwand einerseits und der radialen Richtung R als Verbindungslinie zwischen Drehachse 9 und Rollenachse 11' durch die Horizontalkraft H ein Moment, verursacht durch die Tangentialkraft T auf den Verriegelungshebel 10, in Öffungsrichtung wirkt.

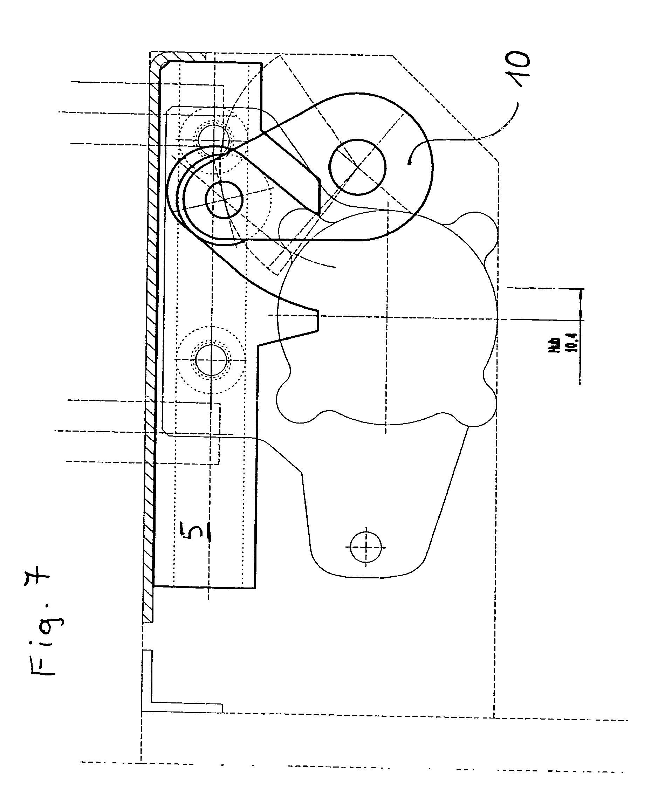

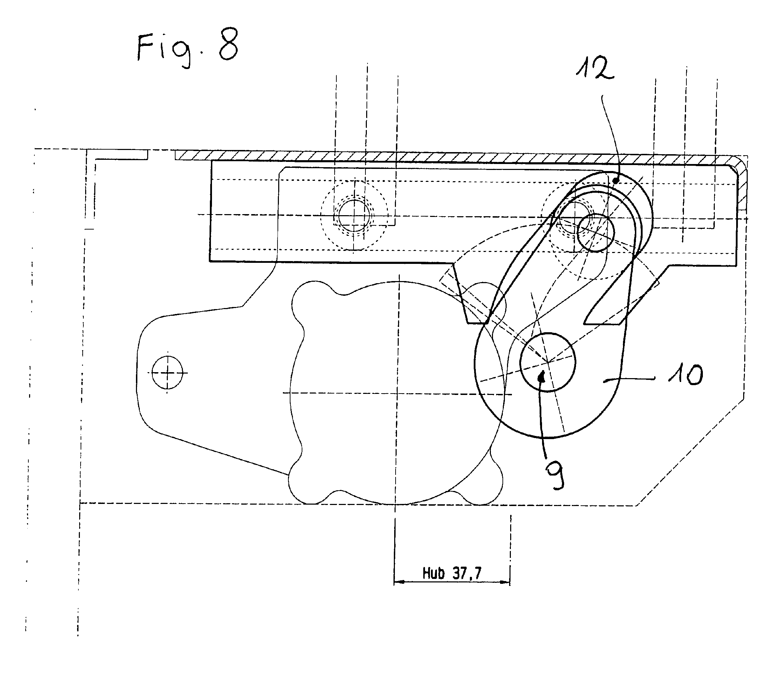

Die Fig. 7 zeigt bei weiter fortschreitendem Hub den Verriegelungshebel in nahezu normaler Richtung auf die Führung 5, die Fig. 8 zeigt die Situation bei weiter verdrehtem Verriegelungshebel 10, der begonnen hat, sich aus der Nut 12 wieder herauszubewegen.

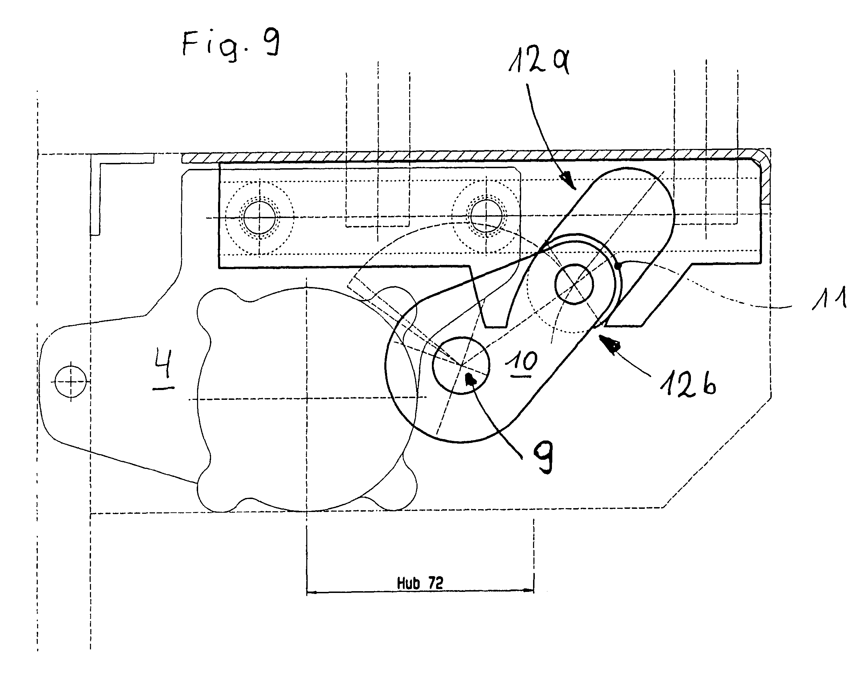

In Fig. 9 schließlich ist die voll ausgefahrene Endlage dargestellt, die Rolle 11 gelangt wieder bis zum oder auch in den gekrümmten Bereich 12b, doch spielt dies wegen der gänzlich verschobenen Lage der Drehachse 9, die sich ja mit dem Schlitten 4 mitbewegt, keine Rolle im Hinblick auf eine Verriegelung.

Im Zuge der in den Fig. 4 bis 9 dargestellten Ausstellbewegung beginnt auch die Verschiebung des Türblattes 3 entlang des Teleskopes 7 (Fig. 1), die Abfolge dieser beiden Bewegungen wird auf bekannte Weise durch eine Führung bewirkt, die fest bezüglich des Fahrzeugkastens 6 anbeordnet ist und die auch (wenn nicht andere Stoppmechanismen, beispielsweise in der Führung 5), vorgesehen sind, das Ende der Ausstellbewegung des Schlittens 4 bewirkt. Durch diese Fixierung des Schlittens 4 wird das Moment, das notwcndig ist, um die Spindel 17 (Fig. 2) zu verdrehen, kleiner als das auf das Motorgehäuse (Zahnrad 14') wirkende Haltemoment durch den fixierten Schlitten, so dass die Drehbewegung der Spindel einsetzt. Selbstverständlich ist es möglich, die Verschiebebewegung der Tür auf andere Weise zu bewerkstelligen, die Vielzahl der bekannten Antriebe kann gemeinsam mit erfindungsgemüßer Verriegelungsvorrichtung für die Tür in der Geschlosscnlagc kombiniert werden.

Die Schließbewegung der Tür erfolgt in genau umgekehrter Reihenfolge wie zuvor die Öffnungsbewegung: Zuerst wird durch den Motor, dessen Gehäuse und das mit ihm verbundene Zahnrad 14' fixiert ist, ein Verdrehen der Spindel in Schließrichtung bewirkt, bei Annäherung des Türblattes an seine Geschlossenlage bewirkt die mit dem Fahrzeugkasten 6 fest verbundene Führung (nicht dargestellt), dass der Schlitten 4 in Richtung von der Fahrzeugaußenseite A weg beweglich wird, worauf das Reaktionsmoment am Zahnrad 14' diese Bewegung einleitet, die nun in Reihenfolge der Fig. 9, 8, 7, 6, 5 und schließlich 4 die Geschlossenlage in der Verriegelt-Position wieder herstellt.

Wie hier ein Vergleich zwischen Fig. 5 und 4 zeigt, ist bei der Bewegung der Verbindungslinie zwischen der Drehachse 9 und der Rollenachse 11' über den Übergangspunkt 18 der Führung 12 das Zusammenfallen von Reaktionskräften herrührend aus Horizontalkraft H und Radialkraft R mit der resultierenden Normalkraft N sichergestellt, so dass es zu einer Verriegelung kommt, ohne dass ein Totpunkt überschritten wird.

Wie bereits eingangs erwähnt, wird die Lage des Verriegelungshebels 10 in der in Fig. 4 dargestellten Position gesichert, beispielsweise durch eine schwache Torsionsfeder im Lager des Verriegelungshebels 10 um die Achse 9 oder auch durch eine formschlüssige Verriegelung durch einen Stift od.dgl., der an passender Stelle in die Nut 12 ragt. Derartige Sicherungen sind auch bei den bekannten Überdruckmechanismen notwendig, da diese nur bei stetig anliegender Kraft in Öffnungsrichtung zuverlässig in der Verriegeltposition bleiben, während sie in völlig unbelastetem Zustand durch Vibrationen od.dgl. auf unerwünschte Weise entriegeln können.

Zur unterschiedlichen Form des Verriegelungshebels in den Fig. 1 bis 3 und Fig. 4 bis 9 ist noch zu sagen, dass bei Fig. 1 bis 3 dieser Hebel auch dazu benutzt wird, eine am unteren Türende angeordnete Haltevorrichtung für das Türblatt 3 zu betätigen. Wie aus der Fig. 1 und 2 ersichtlich ist, bewegt sich im Zuge des Öffnens der Türe der obere Anlenkpunkt der Betätigungsstange 19 nach oben, so dass daraus eine Halte- bzw. Freigabe-Bewegung abgeleitet werden kann. Auch ist es möglich, diesen Betätigungshebel 19 als Teil einer Notbetätigungsvorrichtung auszubilden. Durch eine solche Notbetätigungsvorrichtung kann das zum Öffnen notwendige Moment direkt auf den Verriegelungshebel 10 aufgebracht werden, unabhängig vom eigentlichen Motor.

## Patentansprüche

1. Schwenkschiebetür für Fahrzeuge, insbesondere Schienenfahrzeuge oder Liftkabinen mit mindestens einem Türflügel (3), der im Schließzustand in der Fahrzeugwand angeordnet ist und der im Öffnungszustand an der Außenseite (A) vor der Fahrzeugwand angeordnet ist und dabei eine Türöffnung frei läßt, wobei Antriebsvorrichtungen (2) sowie Querführungsvorrichtungen (4, 5) und Längsführungsvorrichtungen (7) vorgesehen sind, die eine Bewegung des mindestens einen Türflügels (3) quer zu der Fahrzeugwand und entlang der Fahrzeugwand ermöglichen, wobei sich die Längsführungsvorrichtungen mittels der Querführungsvorrichtungen in Querrichtung bewegen, wobei die Tür in der geschlossenen Lage durch einen Schwenkteil, der in eine Führung eingreift, verriegelt wird, und einen Führungsteil (11) aufweist, der mit einer Führung (12) zusammenwirkt, **dadurch gekennzeichnet, dass** die Führung in dem Bereich, in dem der Schwenkteil (10) in der geschlossene Lage der Tür mit ihr zusammenwirkt, einen Kreisbogenabschnitt (12b) um die momentane Lage der Drehachse (9) des Schwenkteiles (10) aufweist.

2. Schwenkschiebetür nach Anspruch 1, **dadurch gekennzeichnet, dass** die Führung in dem Abschnitt (12a), in dem der Schwenkteil (10) mit ihr zusammenwirkt, wenn er sich außerhalb der geschlossenen Lage der Tür befindet, geradlinig verläuft.

3. Schwenkschiebetür nach Anspruch 1 oder 2, **dadurch gekennzeichnet, dass** in der geschlossenen Lage der Tür der Führungsteil (11) des Schwenkteiles (10) im Abstand von dem die beiden Führungsabschnitte (12a, 12b) verbindenden Übergangspunkt (18) positioniert ist.

4. Schwenkschiebetür nach einem der voranstehenden Ansprüche, **dadurch gekennzeichnet, dass** der Schwenkteil (10) auf einem die Querbewegung vollführenden Schlitten (4) um die Drehachse (9) drehbar angeordnet ist.

5. Schwenkschiebetür nach Anspruch 4, **dadurch gekennzeichnet, dass** der Schwenkteil (10) durch das Reaktionsmoment des auf die Langsführungsvorrichtung wirkenden, am Schlitten angeordneten, Antriebsmotors um seine Drehachse (9) verschwenkt wird.

## Claims

1. Plug door for vehicles, in particular for rail vehicles or lift cabins, comprising at least one door leaf (3) which is located in the vehicle wall in the closed state and on the outside (A) in front of the vehicle wall in the open state while leaving a door opening free, wherein there are provided drive devices (2) and transverse guide devices (4, 5) and longitudinal guide devices (7) enabling the at least one door leaf (3) to move at right angles to the vehicle wall and along the vehicle wall, wherein the longitudinal guide devices move in the transverse direction by means of the transverse guide devices, wherein the door is locked in the closed position by a swivel part which engages with a guide and which comprises a guide part (11) acting together with a guide (12), **characterised in that** the guide has, in the region in which the swivel part (10) acts together with it in the closed position of the door, an arc section (12b) about the current position of the axis of rotation (9) of the swivel part (10).

2. Plug door according to claim 1, **characterised in that** the guide extends in a straight line in the section (12a) in which the swivel part (10) acts together with it if it is outside the closed position of the door.

3. Plug door according to claim 1 or 2, **characterised in that** in the closed position of the door the guide part (11) of the swivel part (10) is positioned at a distance from the transition point (18) connecting the two guide sections (12a, 12b).

4. Plug door according to any of the preceding claims, **characterised in that** the swivel part (10) is mounted on a slide (4) performing the transverse movement, while being capable of rotating about the axis of rotation (9).

5. Plug door according to claim 4, **characterised in that** the swivel part (10) is pivoted about its axis of rotation (9) by the reaction torque of the drive motor acting on the longitudinal guide device and mounted on the slide.

## Revendications

1. Porte louvoyante coulissante pour des véhicules, notamment des véhicules sur rails ou des cabines d'ascenseur, comprenant au moins un battant (3) de porte, qui, dans l'état fermé, est monté dans la paroi du véhicule et qui, dans l'état ouvert, est monté du côté (A) extérieur de la paroi du véhicule et dégage ainsi une ouverture de porte, dans laquelle il est prévu des dispositifs (2) d'entraînement, ainsi que des dispositifs (4, 5) de guidage transversal et des dispositifs (7) de guidage longitudinal, qui rendent possible un mouvement du au moins un battant (3) de porte transversalement à la paroi du véhicule et le long de la paroi du véhicule, les dispositifs de guidage longitudinal se déplaçant dans la direction transversale au moyen des dispositifs de guidage transversal, la porte étant verrouillée en la position fermée par une partie de pivotement, qui pénètre dans un guidage, et ayant une partie (11) de guidage, qui coopère avec un guidage (12), **caractérisée en ce que** le guidage a, dans la zone dans laquelle la partie (10) de pivotement, dans la position fermée de la porte, coopère avec lui, un tronçon (12b) d'arc de cercle autour de la position instantanée de l'axe (9) de rotation de la partie (10) de pivotement.

2. Porte louvoyante coulissante suivant la revendication 1, **caractérisée en ce que** le guidage s'étend en ligne droite dans le tronçon (12a), dans lequel la partie (10) de pivotement coopère avec lui, lorsqu'elle se trouve en-dehors de la position fermée de la porte.

3. Porte louvoyante coulissante suivant la revendication 1 ou 2, **caractérisée en ce que**, dans la position fermée de la porte, la partie (11) de guidage de la partie (10) de pivotement est positionnée à distance du point (18) de liaison reliant les deux tronçons (12a, 12b) de guidage.

4. Porte louvoyante coulissante suivant l'une des revendications précédentes, **caractérisée en ce que** la partie (10) de pivotement est montée tournante autour de l'axe (9) de rotation sur un chariot (4) effectuant un mouvement transversal.

5. Porte louvoyante coulissante suivant la revendication 4, **caractérisée en ce que** la partie (10) de pivotement pivotant autour de son axe (9) de rotation par l'effet du couple de réaction du moteur d'entraînement, agissant sur le dispositif de guidage longitudinal, est montée sur le chariot.
